# FASCICULE DE BREVET EUROPEEN

(11) **EP 2 218 761 B1**
(45) Date de publication et mention de la délivrance du brevet: **11.12.2013**
(21) Numéro de dépôt: 10290061.0
(22) Date de dépôt: 10.02.2010
(51) Int. Cl.: C09K 8/536

(54) **Système particulaire micro- ou nanométrique et son utilisation dans des procédés de traitement de puits pétroliers**
Micro- oder nanodimensionales Teilchensystem und dessen Verwendung im Verfahren zur Behandlung von Ölquellen
Particulate system of micrometric or nanometric dimensions and use thereof in processes for treating oil wells

(30) Priorité: 17.02.2009 FR 0900728
(43) Date de publication de la demande: 18.08.2010
(73) Titulaire: IFP Energies nouvelles, 92852 Rueil-Malmaison Cedex (FR)
(72) Inventeur: Villatte, Céline, 92500 Rueil Malmaison (FR); Argillier, Jean-François, 92500 Rueil Malmaison (FR)

(56) Documents cités:
- WO-A-2008/112009
- FR-A- 2 881 787
- US-A1- 2008 058 229

## Description

### Domaine technique de l'invention

La présente invention concerne une méthode de traitement de formations rocheuses utilisant des micro- ou nanoparticules obtenues à partir d'émulsions eau dans huile.

### Art antérieur

La demande de brevet FR-2 881 787 décrit une méthode de traitement des réservoirs pétroliers par injection de particules de taille nanométriques comprenant un polymère hydrosoluble actif anti-dépôts minéraux encapsulé dans une matrice pour former un nanocomplexe. La formation de ces nanocomplexes se fait par précipitation contrôlée de polyélectrolytes cationiques et anioniques. Après formation et éventuelle réticulation en phase aqueuse, les nanocomplexes sont dispersés en phase organique. La granulométrie des nanocomplexes ainsi obtenus varient en fonction du choix des polymères de départ et est assez délicatement contrôlable.

La demanderesse a mis en évidence, que d'une façon surprenante, il était possible d'obtenir des micro- ou nanoparticules dont la granulométrie est plus facilement contrôlable et ne dépend pas uniquement des polymères utilisés, contrairement à ce qui était décrit dans l'art antérieur.

### Description détaillée de l'invention

La présente invention porte sur une méthode de traitement de formations ou de cavités souterraines poreuses et perméables dans laquelle on effectue les étapes suivantes :
- on prépare une composition comprenant le système particulaire de taille micro-ou nanométriques de complexes polycation/polyanion obtenues par mélange d'au moins deux émulsions de type eau dans huile, une première émulsion contenant un polymère anionique dans l'eau et une deuxième émulsion contenant un polymère cationique dans l'eau, la granulométrie des particules étant contrôlée à partir des granulométries desdites première et deuxième émulsions,
- on injecte ladite composition dans la formation poreuse et perméable dans laquelle s'écoule de l'eau et/ou de l'huile et/ou du gaz.

La granulométrie des particules d'hydrogel formées par complexation des polyélectrolytes de charges opposées est contrôlée au moins en partie par la taille des deux émulsions contenant respectivement un polymère anionique et un polymère cationique.

D'autre part, les micro ou nanoparticules du système particulaire formées à partir des émulsions de polyélectrolytes se trouvent naturellement dispersées dans une phase continue huile.

Les émulsions utilisées pour préparer le système particulaire de taille micro- ou nanométriques de complexes (hydrogel) polycation/polyanion sont des émulsions de type eau dans huile.

La phase huile de l'émulsion est constituée de tous les types d'huiles ou de solvants organiques, à partir du moment où le système de tensioactif choisi permet d'obtenir des émulsions suffisamment stables pour former les micro ou nanoparticules.
Tout type d'huile connu peut être utilisé : l'huile est choisie en fonction de l'application recherchée et/ou d'un cahier des charges donné.

La phase organique est constituée, par exemple, soit par une huile minérale commerciale soit par une huile de synthèse, ou par une huile végétale ou tout mélange de ces huiles.

Pour certaines applications pour lesquelles les réglementations environnementales sont strictes, comme par exemple les traitements de puits ou de formations pétrolières en Mer du Nord, on pourra avantageusement utiliser une phase huile biodégradable ou peu écotoxique comme par exemple les huiles végétales, leurs esters ou autres dérivés.

Le polymère anionique contenu dans la première émulsion est choisi parmi les polymères anioniques classiques connus de l'Homme du métier.
On citera par exemple les polymères ou copolymères dérivant de monomères anionique contenant des groupements carboxylate, sulfonate, phosphate ou phosphonate, les copolymères synthétiques dérivant de monomères anioniques tels que décrits précédemment et de monomères neutres et les polymères naturels.

Les monomères anioniques peuvent être choisis parmi les monomères acrylate, méthacrylate, itaconate, 2-acrylamido-2-méthyl-propane sulfonate, 2-méthacryloyloxy éthane sulfonate, 3-acrylamido-3-méthyl butanoate, styrène sulfonate, styrène carboxylate, vinyl sulfonate et les sels de l'acide maléique.

Les monomères neutres peuvent être par exemple choisis parmi l'acrylamide, l'acide acrylique, la vinyl pyrrolidone, l'oxyde d'éthylène, l'oxyde de propylène, l'anhydride maléïque et l'alcool vinylique.

Les polymères naturels sont choisis parmi tels les dérivés cellulosiques modifiés négativement, du type CMC, les polysaccharides de type xanthane, alginate, gomme arabique, les amidons modifiés négativement, les galactomannanes modifiés négativement.

Le polymère cationique contenu dans la deuxième émulsion est choisi parmi les polymères cationiques classiques connus de l'Homme du métier.

On citera par exemple les polymères ou copolymères synthétiques dérivant de monomères cationiques classiques, c'est-à-dire de formule générale suivante : 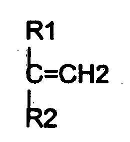 où R1 ou R2 comportent au moins un atome N,
les polyethylènes imines, les polyamides amines, les polyamines, les copolymères synthétiques dérivant de monomères cationiques et de monomères neutres et les polymères naturels tels que les amidons modifiés positivement, les chitosanes, la gélatine, les galactomannanes modifiés positivement, ou les dérivés cellulosiques modifiés positivement.

Au niveau du choix du tensioactif utilisé pour obtenir les émulsions, on choisira de préférence des tensioactifs non ioniques, ou leur mélange, pour qu'il n'y ait pas d'interaction spécifique trop forte entre les polymères chargés et les molécules de tensioactifs. Comme tensioactif, il est envisageable dans la présente invention d'utiliser tous les tensioactifs non ioniques classiques et connus. Les produits tensioactifs non ioniques peuvent être classés selon le mode de liaison entre la partie hydrophobe et la partie hydrophile de la molécule. Ce mode de liaison peut être un pont éther, un pont ester, un pont amide, ou autres.

On citera par exemple comme dérivés non ioniques à pont éther les alcools gras oxyéthylés, les alkylphénols oxyéthylés, les produits oxyéthylés-oxypropylés, les éthers de glucose. Parmi les agents de surface non ioniques à pont ester, on citera par exemple les esters de glycérol, les esters de polyéthylèneglycols, les esters de sorbitanne, ou les esters de sucre.

Les composés non ioniques à liaisons amides peuvent être des diéthanolamides. D'autres composés non ioniques tels que les amines grasses éthoxylées peuvent être utilisés.

On peut citer également les alkanolamides éthoxylées, les amines éthoxylées, ou les copolymères bloc d'oxyde d'éthylène ou de propylène.

Avantageusement, il est possible d'ajouter un agent réticulant dans au moins une des émulsions comprenant le polymère cationique ou le polymère anionique, pour améliorer la résistance mécanique de l'hydrogel obtenu.

L'agent de réticulation sera choisi parmi ceux connus de l'homme de l'art en fonction de la chimie des polymères.

Selon un mode de réalisation, le système particulaire de taille micro- ou nanométrique est obtenu par un procédé comprenant au moins les étapes suivantes:
1) mélange de la phase aqueuse comprenant au moins le polymère anionique avec au moins un tensioactif, et mélange de la phase aqueuse comprenant au moins le polymère cationique, avec au moins un tensioactif, puis homogénéisation des deux émulsions ainsi obtenues pour obtenir deux prémix bruts,
2) éventuellement calibrage des prémix à la granulométrie désirée,
3) addition de la phase organique et homogénéisation des deux émulsions.
4) mélange des deux émulsions sous agitation mécanique

Selon un autre mode de réalisation, le système particulaire de taille micro- ou nanométrique est obtenu par un procédé comprenant au moins les étapes suivantes:
1) mélange d'au moins un tensioactif dans la phase organique et homogénéisation,
2) mélange de la phase aqueuse comprenant au moins le polymère anionique avec la phase organique obtenue à l'étape précédente, et mélange de la phase aqueuse comprenant au moins le polymère cationique avec la phase organique obtenue à l'étape précédente, puis homogénéisation des deux émulsions.
3) mélange des deux émulsions obtenues sous agitation mécanique

L'homogénéisation des deux émulsions peut se faire de façon manuelle, ou dans une turbine, par exemple de type Ultra Turrax® (IKA Labortechnik) pour soumettre le mélange à l'action d'un cisaillement important.

La réalisation d'émulsions calibrées d'eau contenant un polymère dans une phase huile peut également se faire par d'autres techniques que celles nécessitant l'utilisation de prémix concentrés en phase dispersée. On peut citer par exemple l'utilisation d'un homogénéiseur haute pression, l'émulsification membranaire ou la séparation de taille à partir d'une émulsion polydisperse.

Si nécessaire, le pH de la phase aqueuse est ajusté par addition d'acide ou de soude à la valeur souhaitée. De la même façon, la force ionique peut également être ajustée.

La concentration en tensioactif doit être suffisante pour que les émulsions soient stables. D'après ce qui est connu de l'homme de l'art, la concentration en tensioactif sera préférentiellement supérieure à la CMC (concentration micellaire critique) avant le mélange des deux émulsions

La concentration en polymères dans les phases aqueuses est ajustable en fonction de la concentration et la composition du complexe recherché.
Les concentrations en polymères (anionique dans une phase aqueuse, cationique dans l'autre) sont préférentiellement comprises entre 0,5% et 50% en masse.

Le rapport des phases eau/huile est variable. Dans les exemples suivants, le rapport est de l'ordre de 10 à 50 % en volume de phase aqueuse et donc de 50 à 90% en volume de phase huile. Toutefois ces proportions ne sont pas limitatives, et d'autres proportions conviennent dans la mesure où elles permettent de former des émulsions suffisamment stables.

Le système particulaire nano- ou micrométrique utilisé dans la méthode selon la présente invention est caractérisé en déterminant leur taille par la méthode de diffusion dynamique de la lumière (DLS).

Des observations réalisées en microscopie optique permettent également de caractériser l'état de dispersion du système obtenu, ainsi que sa stabilité.

La composition peut également comprendre des sels, acides ou bases, ainsi que toute sorte d'additifs, comme par exemple des additifs anticorrosion.

Cette méthode s'adresse principalement au traitement de formations rocheuses et plus particulièrement au traitement de puits d'exploitation d'hydrocarbures. Ce traitement concerne par exemple la prévention des dépôts minéraux, la prévention des venues d'eau, la prévention des venues de fines particules comme le sable. Il peut également concerner d'autres domaines tels que le contrôle de profils lors d'opérations de récupération assistée par balayage à partir de puits injecteurs (encore appelées "conformance control").

Dans le cas particulier du traitement des réservoirs par injection de nanoparticules contenant un additif anti-dépôts minéraux, il est possible de choisir le polymère anionique de façon à ce qu'il soit un polymère anti-dépôt classique tel qu'un polyacrylate, polyphosphate, phosphonate, polysulfonate, de type hydrosoluble, de masse moléculaire généralement assez faible, comprise entre 400 et 20000 Dalton. Parmi les principaux inhibiteurs, on peut citer:
- les polyphosphates et en particulier l'acide orthophosphorique;
- les composés organophosphorés comme les esters d'acide phosphorique, les phosphonates et les acides phosphinocarboxyliques;
- les polymères et copolymères de synthèse à base d'acide acrylique, vinylsulfoniques, maléiques, vinyl acétate, vinyl alcool, acrylamide, comportant éventuellement une ou plusieurs fonctions phosphonate;
- les produits verts tels que les polyaspartates, les polysaccharides (tels que la carboxyméthylinuline, la carboxyméthylcellulose).

Ainsi dans ce type d'application, en utilisant les particules préparées selon les procédés décrits dans la présente invention, il est possible de les disperser d'après leur mode de fabrication naturellement dans une phase huile, ce qui peut très fortement limiter l'endommagement de la formation pétrolière par rapport à une injection en phase aqueuse. Ceci présente un avantage par rapport à la solution proposée dans la demande de brevet FR 2 881 787.

Dans le cas du traitement en vue de la prévention des venues de sables ou de particules fines mobiles, l'adsorption des particules nano- ou micrométriques telles que décrites ci-dessus favorise la retenue de ces particules et donc ralentit, voire élimine, les venues de sables ou phénomènes équivalents dans les drains forés dans la formation.
Des remblais de sols peuvent être avantageusement stabilisés et rendus nettement moins perméables par l'injection d'une composition liquide comprenant les particules selon l'invention.

Dans le cas d'un traitement en vue de la prévention des venues d'eau, on injecte ladite composition dans une formation comportant une zone à forte perméabilité à l'eau pour réduire sélectivement la perméabilité à l'eau dans les réservoirs d'huile, de gaz ou dans les stockages de gaz. Selon un mode de réalisation, ladite composition comprend un système particulaire dans lequel le polymère anionique est choisi parmi les polymères actifs anti-dépôts minéraux.

Au niveau du "conformance control", on cherchera à améliorer le contrôle de profil lors d'opérations de récupération assistée par balayage à partir de puits injecteurs. Ce traitement permet de réduire la perméabilité de certaines zones à l'intérieur de la formation pétrolière, et par conséquent d'assurer un meilleur balayage du réservoir. On améliore ainsi le taux de récupération de façon notable.

La présente invention sera mieux comprise et ses avantages apparaîtront plus nettement à la lecture des essais, nullement limitatifs, décrits ci-après.

### Exemples

### Exemple 1 - Préparation à partir d'émulsions de polyélectrolytes calibrées à pH10

### Matériel :

- Polymère cationique: Poly(allylamine Hydrochloride) M_{w}=70000g.mor⁻¹ (Aldrich) (C₃H₇N, HCl)ₙ, M_{monomère}=57g.mor⁻¹ lot : 14213DH-098, CAS : 71550-12-4 (polycation, noté PAH dans la suite)
- Polymère anionique: Poly(sodium 4-styrenesulfonate) Mw=70000g.mol⁻¹ (Aldrich) (C₈H₇NaO₃S)n, M_{monomère}=206g.mol⁻¹, lot : PS03926KQ, CAS : 25704-18-1 (polyanion, noté PSS dans la suite)
- Chlorure de Sodium Rectapur (VWR) NaCl, M=58,44g.mol⁻¹, lot : 07F210006, CAS : 7647-14-5 (sel)
- Hydroxyde de Sodium 30% Rectapur (VWR) NaOH, M=40g.mol⁻¹, lot : 0604783, CAS : 1310-73-2 (ajustement pH)
- Span 80 (sorbitan monooleate) (Sigma) C₂₄H₄₄O₆, M=428,62g.mol⁻¹, lot : 114K0137, CAS : 1338-43-8 (surfactant liposoluble )
- Dodécane pour synthèse Rectapur (VWR) 08B060536 C₁₂H₂₆, M=170,34g.mol⁻¹, Lot : 08B060536, CAS : 112-40-3 (huile, phase continue)
- Eau MilliQ

### Procédé :

A- Préparation de deux émulsions span80/dodécane/phase aqueuse : 5/75/20 (p) Les phases aqueuses sont les solutions suivantes :
a) PSS 0,625% p/p dans NaCl 0,1 M dans l'eau milliQ, ajustement à pH10 après dissolution du polyanion (Solution incolore)
b) PAH 5% p/p dans NaCl 0,1M dans l'eau milliQ, ajustement à pH10 après dissolution du polycation (Solution incolore)

Les émulsions diluées sont réalisées à la main, en trois étapes, pour chaque solution aqueuse :
1- Introduction progressive de la phase aqueuse (a) ou b)) dans le Span 80, homogénéisation avec une spatule, ratio surfactant/phase aqueuse : 20/80 p/p. On obtient ainsi un prémix brut.
2- Puis cisaillement de ce prémix dans un mortier afin d'obtenir un prémix monodisperse. On obtient ainsi un prémix calibré.
3- Dilution progressive du prémix calibré par addition du dodécane, homogénéisation à la spatule, ratio prémix/dodécane : 25/75 p/p.

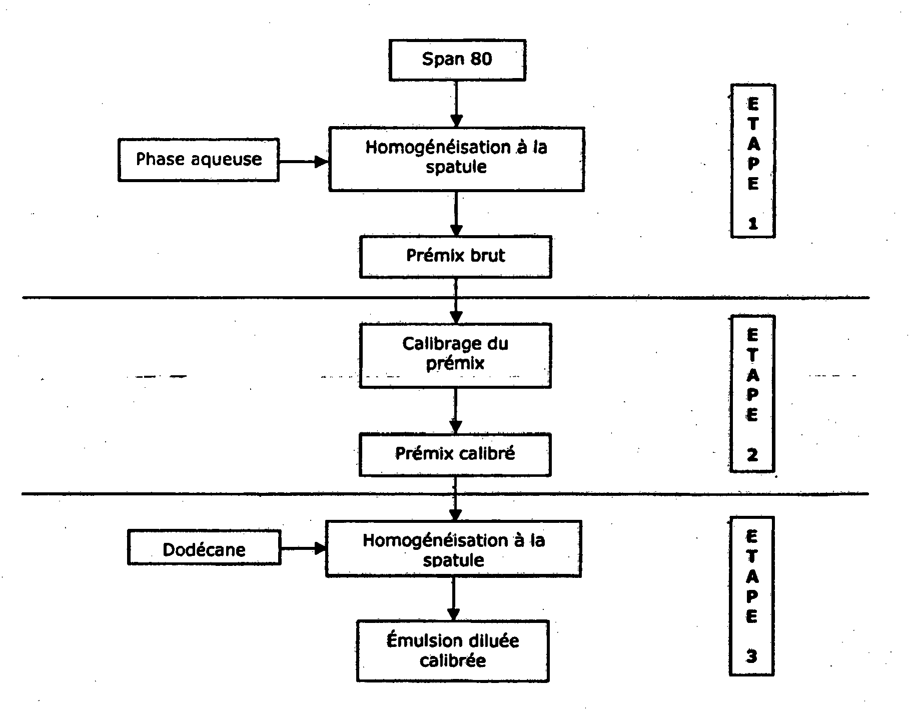

La composition de l'émulsion diluée ainsi obtenue est la suivante :

| composants | Span 80 | Phase aqueuse | Dodécane |
|---|---|---|---|
| % massique des composants | 5 | 20 | 75 |

Les émulsions 1-a) réalisée avec la phase aqueuse a et 1-b) réalisée avec la phase aqueuse b) sont blanches.

### B- Réaction entre émulsions

On mélange à volume égal, les émulsions 1-a) et 1-b), par introduction lente de 1-a) dans 1-b), sous agitation magnétique 1000rpm

### Tous les mélanges sont blancs.

La mesure de la taille des gouttelettes est réalisée par la méthode DLS sur un Zetasizer Nano ZS (Malvern), à T_{amb}.

Les observations en microscopie optique sont réalisées sur un Olympus avec objectif x100, à immersion d'huile.

### Caractérisation des émulsions

### Émulsions diluées calibrées

### Granulométrie

| Systèmes | taille moyenne (nm) |
|---|---|
| émulsion 1-a) | 220 |
| émulsion 1-b) | 230 |
| Mélange 50/50 v/v | 235 |

On observe qu'il n'y pas d'augmentation significative de la taille des gouttelettes de phase dispersée, ni de déstabilisation des systèmes, même après mélange des deux émulsions.

Ces essais de mélanges ont également été réalisés entre une émulsion diluée calibrée et non calibrée (pour cette dernière, l'étape 2 de calibrage du prémix n'a pas été effectuée)

### Mélanges d'émulsion diluée calibrée et non calibrée (n.c.)

### Granulométrie

| Systèmes | taille moyenne (nm) |
|---|---|
| émulsion 1-b) non | 290 |
| calibrée | |
| Mélange 1-a)/1-b) | 240 |
| n.c. : 50/50 v/v | |

Les conclusions précédentes restent valables : on ne note pas d'augmentation de la taille des gouttelettes de phase dispersée ni de déstabilisation des systèmes, même après mélange des deux émulsions.

### Exemple 2 - Préparation à partir d'émulsions de polyélectrolytes calibrées à pH5.

La charge du polycation (PAH) dépendant du pH, il était intéressant d'étudier la réaction des 2 émulsions de polyélectrolytes à pH 5.

### Matériel : composants identiques à ceux de l'exemple 1.

### A- Préparation de deux émulsions span80/dodécane/phase aqueuse : 5/75/20 (p)

Les phases aqueuses sont les solutions suivantes :
a) PSS 0,625% p/p dans NaCl 0,1M dans l'eau milliQ, ajustement à pH5 après dissolution du polyanion (Solution incolore)
b) PAH 5% p/p dans NaCl 0,1M dans l'eau milliQ, ajustement à pH5 après dissolution du polycation (Solution incolore)

Le procédé de fabrication des émulsions 2-a) réalisée avec la phase aqueuse a) de l'exemple 2, et 2-b) réalisée avec la phase aqueuse b) de l'exemple 2 sont identiques à celui mis en oeuvre pour préparer les émulsions 1-a) et 1-b).

### Les émulsions 2- a) et 2-b) sont blanches.

### B- Réaction entre émulsions

On mélange, à volume égal, des émulsions 2-a) et 2-b) par introduction lente de 2-a) dans 2-b), sous agitation magnétique 1000rpm

### Tous les mélanges sont blancs.

### Caractérisation des émulsions

### Granulométrie

| Systèmes | taille moyenne (nm) |
|---|---|
| émulsion 2-a) | 230 |
| émulsion 2-b) | 230 |
| Mélange 50/50 v/v | 235 |

Ici aussi on observe qu'il n'y pas d'augmentation significative de la taille des gouttelettes de phase dispersée, ni de déstabilisation des systèmes, même après mélange des deux émulsions.

### Exemple 3 - Préparation d'émulsions Polyélectrolytes pH10/Span 80/Dodécane: Utilisation de l'Ultra Turrax^{®}

### Matériel : composants identiques à ceux de l'exemple 1.

### A- Préparation de deux émulsions span80/dodécane/phase aqueuse : 5/75/20 (p)

Les phases aqueuses sont les solutions de l'exemple 1.

Les émulsions diluées sont réalisées à l'Ultra Turrax^{®}, en deux étapes, pour chaque solution aqueuse :
1- Mélange Span 80/Dodécane : 6,25/93,75 (p/p) à l'Ultra Turrax^{®}, 1000rpm, 3 min.
2- Introduction progressive de la phase aqueuse (a) ou b)) dans le mélange Span 80/Dodécane (réalisé à l'étape 1-), vitesse 10000rpm pendant 5min., ratio phase organique/phase aqueuse : 25/75 p/p.

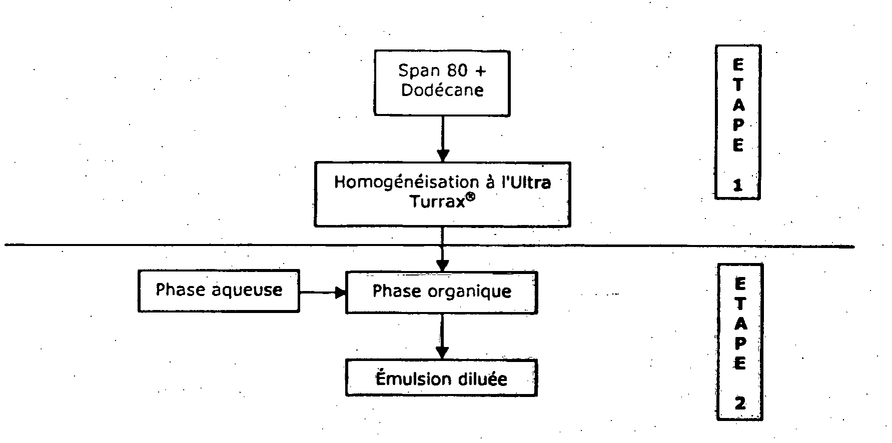

De cette façon, par ce procédé, on obtient une émulsion diluée polydisperse

Les émulsions 3-a) réalisée avec la phase aqueuse a) de l'exemple 3, et 3-b) réalisée avec la phase aqueuse b) de l'exemple 3 sont blanches.

### B- Réaction entre émulsions

Mélange, à volume égal, des émulsions 3-a) et 3-b) : introduction lente de 3-a) dans 3-b), sous agitation à l'Ultra Turrax^{®} 10000rpm.

Tous les mélanges sont blancs.

### Caractérisation des émulsions

### Granulométrie

| Systèmes | taille moyenne (nm) |
|---|---|
| émulsion 3-a) | 600 |
| émulsion 3-b) | 980 |
| Mélange 50/50 v/v Ultra Turrax | 850 |

On n'observe pas d'augmentation significative de la taille des gouttelettes de phase dispersée, ni de déstabilisation des systèmes, même après mélange des deux émulsions.

### Exemple 4 - Préparation de prémix Polyélectrolytes pH10/Span 80: Utilisation de l'Ultra Turrax^{®}

### Matériel :composants identiques à ceux de l'exemple 1 (sans le dodécane)

### A- Préparation de deux prémix span80/phase aqueuse : 20/80 (p)

Les phases aqueuses sont les solutions de l'exemple 1.

Les prémix sont d'abord réalisés à la main, puis sont terminés à l'Ultra Turrax^{®}, pour chaque solution aqueuse :
1- Introduction progressive de la phase aqueuse (a) ou b)) dans le Span 80, homogénéisation avec une spatule, ratio surfactant/phase aqueuse : 20/80 p/p. on obtient ainsi un prémix brut.
2- Homogénéisation du prémix brut à l'Ultra Turrax^{®}, vitesse 10000rpm pendant 5min.

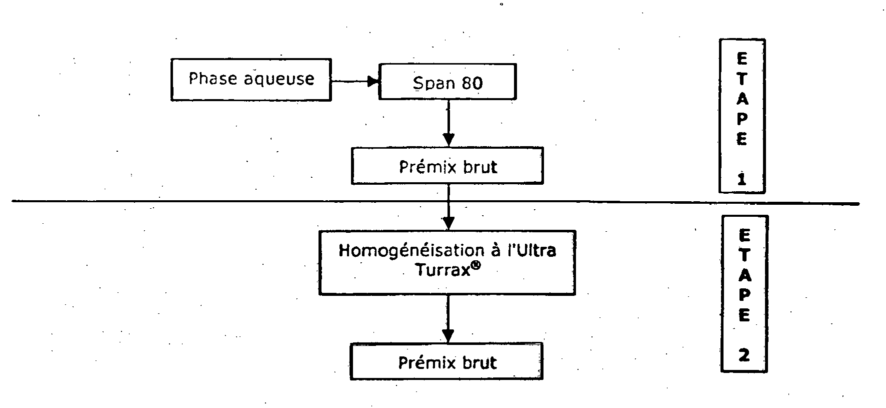

On obtient par ce procédé un prémix polydisperse

Les prémix 4-a) réalisé avec la phase aqueuse a) de l'exemple 4, et 4-b) réalisé avec la phase aqueuse b) de l'exemple 4 sont blancs.

### B- Réaction entre émulsions

On mélange, à masse égale, des prémix 4-a) et 4-b), sous agitation à l'Ultra Turrax^{®} 10000rpm.

Puis on dilue le mélange de prémix dans le dodécane, avec un ratio Dodécane/mélange des prémix : 75/25 p/p.

On obtient une émulsion diluée.

Tous les mélanges sont blancs.

### Caractérisation des émulsions

### Granulométrie

| composants | taille moyenne (nm) |
|---|---|
| prémix 4-a) | N/A |
| prémix 4-b) | N/A |
| Mélange 50/50 v/v Ultra Turrax | N/A |
| Émulsion diluée du mélange | 390 |

| | |
|---|---|
| N/A : non applicable car prémix et mélanges trop compacts (aspect beurre dur) | |

On observe une sédimentation rapide de l'émulsion diluée, mais pas de déstabilisation des systèmes.

### Exemple 5- Préparation d'émulsions avec des réactifs colorés /Span 80/Dodécane:

Pour s'assurer que les phases aqueuses des 2 émulsions de départ se mélangeaient effectivement, nous avons réalisé un mélange avec 2 réactifs colorés (acétate de zinc et le murexide) qui changent de couleur quand ils sont en contact.

Matériel : composants de l'exemple 1 (sans les solutions de PSS, PAH et NaOH), mais avec:
Acétate de Zinc (Sigma) (CH₃CO₂)₂Zn, M=183,48g.mol⁻¹, lot : 12328P, CAS : 557-34-6 (réactif)
Murexide (Fluka) (C₈H₈N₆O₆₎, M=284,19g.mol⁻¹, lot : 07F210006, CAS : 3051-09-0 (réactif)

### A- Préparation de deux émulsions span80/dodécane/phase aqueuse : 5/75/20 (p)

Les phases aqueuses sont les solutions suivantes :
a) Acétate de Zinc 0,1% p/v dans l'eau MilliQ (solution incolore)
b) Murexide 0,1 % p/v dans l'eau MilliQ (solution mauve)

Le procédé de fabrication et la composition massique des émulsions sont identiques ceux décrits dans l'exemple 1.

Les essais ont été réalisés pour des tailles de gouttelettes de phase dispersée de 200nm pour les deux émulsions 5-a) et 5-b).

Les émulsions 5-a) réalisée avec la phase aqueuse a) de l'exemple 5 et 5-b) réalisée avec la phase aqueuse b) sont respectivement blanche, et rose/mauve.

### B- Réaction entre émulsions

On mélange, à volume égal, des émulsions 5-a) et 5-b) par introduction lente de 5-a) dans 5-b) sous agitation magnétique 1000rpm.

Les deux mélanges deviennent rose clair, très faiblement orangés. Ces observations semblent prouver de manière qualitative, non quantitative, que la coalescence peut avoir eu lieu entre les gouttelettes de chaque émulsions de même distribution granulométrique aqueuses et de force ionique identique.

### Caractérisation des émulsions

### Granulométrie

| Systèmes | z-average (nm) |
|---|---|
| émulsion 5-a) | 250 |
| émulsion 5-b) | 245 |
| Mélange 5-b)/5-c) : | 250 |
| 50/50 v/v | |

Le système "Mélange 5-a)/5-b)" et Mélange 6-b)/6-c) n'évolue pas de manière significative en terme de taille par rapport aux émulsions initiales. En revanche, le changement de coloration après mélange (orangé) démontre la réaction entre les 2 émulsions.

Initialement, la réaction entre les phases aqueuses seules a)-b) donne une solution transparente orange, prouvant la réaction entre les réactifs Acétate de zinc et Murexide.

### Exemple 6 - Préparation d'émulsions Polyélectrolytes+réactifs colorés/Span 80/Dodécane (Taille de gouttelettes identiques, avec ou sans différence de force ionique)

Matériel :composants de l'exemple 1 (sans NaOH) avec:
Acétate de Zinc (Sigma) (CH₃CO₂)₂Zn, M=183,48g.mol⁻¹, lot : 12328P, CAS : 557-34-6 (réactif)
Murexide (Fluka) (C₈H₈N₆O₆), M=284,19g.mol⁻¹, lot : 07F210006, CAS : 3051-09-0 (réactif)

### A- Préparation de trois émulsions span80/dodécane/phase aqueuse : 5/75/20 (p)

Les phases aqueuses sont les solutions suivantes :
a) PSS 0,625% p/p dans l'acétate de Zinc 0,1% p/v dans l'eau MilliQ (solution incolore)
b) PAH 5% p/p dans le murexide 0,1% p/v dans l'eau MilliQ (solution mauve)

Le procédé de fabrication et la composition massique des émulsions sont identiques ceux décrits dans l'exemple 1.

Les essais ont été réalisés pour des tailles de gouttelettes de phase dispersée de 200nm pour les deux émulsions 6-a) et 6-b).

Les émulsions 6-a) réalisée avec la phase aqueuse a) de l'exemple 6 et 6-b) réalisée avec la phase aqueuse b) sont respectivement blanche, et rose/mauve.

### B- Réaction entre émulsions

On mélange, à volume égal, des émulsions 6-a)/6-b) par introduction lente de 6-a) dans 6-b), sous agitation magnétique 1000rpm.

Les deux mélanges deviennent faiblement orangés. Ces observations semblent prouver de manière qualitative, non quantitative, que la coalescence peut avoir eu lieu entre les gouttelettes de chaque émulsions de même distribution granulométrique aqueuses et de force ionique identique.

### Caractérisation des émulsions

### Granulométrie

| Systèmes | taille moyenne (nm) |
|---|---|
| émulsion 6-a) | 215 |
| émulsion 6-b) | 215 |
| Mélange 6-a)/6-b) : | 220 |
| 50/50 v/v | |

La distribution granulométrique du Mélange 6-a)/6-b), n'évolue pas de manière significative par rapport aux émulsions initiales.

On n'observe pas de déstabilisation des systèmes, même après mélange des deux émulsions.

La coloration de l'émulsion obtenue en orange confirme le mélange entre les 2 phases aqueuses des émulsions de départ.

**Exemple 7 - Préparation d'émulsions Polyélectrolytes pH10/Span 80/Dodécane:**

### Phases aqueuses concentrées en polyélectrolytes

Matériel :composants identiques à ceux de l'exemple 1.

### A- Préparation de prémix span80/phase aqueuse : 20/80 (p)

Les phases aqueuses sont les solutions suivantes :
a) PSS 0,625% p/p dans NaCl 0,1 M dans l'eau MilliQ, ajustement à pH10 après dissolution du polyanion (Solution incolore)
b) PSS 1,4% p/p dans NaCl 0,1M dans l'eau MilliQ, ajustement à pH10 après dissolution du polyanion (Solution incolore)
c) PAH 5% p/p dans NaCl 0,1M dans l'eau MilliQ, ajustement à pH10 après dissolution du polycation (Solution incolore).

Le procédé de fabrication et la composition massique des émulsions sont identiques ceux décrits dans l'exemple 1.

Les émulsions 7-a) réalisée avec la phase aqueuse a) de l'exemple 7, 7-b) réalisée avec la phase aqueuse b) de l'exemple 7 et 7-c) réalisée avec la phase aqueuse c) de l'exemple 7 sont blanches

### B- Réaction entre émulsions

On mélange, à volume égal, des émulsions 7-a)/7-c) et 7-b)/7-c) par introduction lente de 7-a) dans 7-c) et 7-b) dans 7-c), sous agitation magnétique 1000rpm

Tous les mélanges sont blancs.

### Caractérisation des émulsions

### Émulsions diluées calibrées

### Granulométrie

| Systèmes | taille moyenne (nm) |
|---|---|
| émulsion 7-a) | 250 |
| émulsion 7-b) | 220 |
| émulsion 7-c) | 235 |
| Mélange 7-a)/7-c) : | 245 |
| 50/50 v/v | |
| Mélange 7-b)/7-c) : | 228 |
| 50/50 v/v | |

On n'observe pas d'augmentation significative de la taille des gouttelettes de phase dispersée, pas de déstabilisation des systèmes, même après mélange des deux émulsions.

### Exemple 8 : Préparation d'émulsions Polyélectrolytes pH10/Span 80/Dodécane Différence de force ionique entre les gouttelettes des deux émulsions et/ou différence de distribution granulométrique

### Matériel :composants identiques à ceux de l'exemple 1.

### A- Préparation de deux émulsions span80/dodécane/phase aqueuse : 5/75/20 (p)

Les phases aqueuses sont les solutions suivantes :
a) PSS 0,625% p/p dans NaCl 0,1 M dans l'eau MilliQ, ajustement pH à 10 après dissolution du polyanion (Solution incolore)
b) PSS 0,625% p/p dans NaCl 0,5M dans l'eau MilliQ, ajustement pH à 10 après dissolution du polyanion (Solution incolore)
c) PAH 5% p/p dans NaCl 0,1 M dans l'eau MilliO, ajustement pH à 10 après dissolution du polycation (Solution incolore)
d) PAH 5% p/p dans NaCl 0,5M dans l'eau MilliQ, ajustement pH à 10 après dissolution du polycation (Solution incolore)

Le procédé de fabrication et la composition massique des émulsions sont identiques ceux décrits dans l'exemple 1.

Les émulsions 8-a) réalisée avec la phase aqueuse a) de l'exemple 8, 8-b) réalisée avec la phase aqueuse b) de l'exemple 8, 8-c) réalisée avec la phase aqueuse c) de l'exemple 8 et 8-d) réalisée avec la phase aqueuse d) de l'exemple 8 sont blanches.

### B- Réaction entre émulsions

On mélange, à volume égal, des émulsions 8-a)/8-d) et 8-b)/8-c) par introduction lente de 8-a) dans 8-d) et 8-b) dans 8-c), sous agitation magnétique 1000rpm

Tous les mélanges sont blancs. Ces observations ne prouvent pas que la coalescence a eu lieu entre les gouttelettes de chaque émulsions de même taille de gouttelettes aqueuses et de force ionique différente.

### Caractérisation des émulsions

### Émulsions diluées calibrées

| composants | taille moyenne |
|---|---|
| | (nm) |
| émulsion 8-a) | 220 |
| émulsion 8-b) | 205 |
| émulsion 8-c) | 210 |
| émulsion 8-d) | 220 |
| Mélange 8-a)/8-d) : | 220 |
| 50/50 v/v | |
| Mélange 8-b)/8-c) : | 210 |
| 50/50 v/v | |

Ces essais montrent qu'il n'y a pas d'augmentation significative de la taille des gouttelettes de phase dispersée, pas de déstabilisation des systèmes, même lorsque la force ionique des mélanges sont différentes.

## Revendications

1. Méthode de traitement de formations ou de cavités souterraines poreuses et perméables dans laquelle on effectue les étapes suivantes :
- on prépare une composition comprenant un système particulaire de taille micro- ou manométrique de complexes polycation/polyanion obtenus par mélange d'au moins deux émulsions de type eau dans huile, une première émulsion contenant un polymère anionique dans l'eau et une deuxième émulsion contenant un polymère cationique dans l'eau, la granulométrie des complexes étant contrôlée à partir des granulométries desdites première et deuxième émulsions,
- on injecte ladite composition dans la formation poreuse et perméable dans laquelle s'écoule de l'eau et/ou de l'huile et/ou du gaz.

2. Méthode selon la revendication 1 **caractérisé en ce que** le système particulaire de taille micro- ou nanométrique est obtenu par un procécé comprenant au moins les étapes suivantes:
1) mélange de la phase aqueuse comprenant au moins le polymère anionique avec au moins un tensioactif, et mélange de la phase aqueuse comprenant au moins le polymère cationique, avec au moins un tensioactif, puis homogénéisation des deux émulsions ainsi obtenues pour obtenir deux prémix bruts,
2) éventuellement calibrage des prémix à la granulométrie désirée,
3) addition de la phase organique et homogénéisation des deux émulsions.
4) mélange des deux émulsions sous agitation mécanique

3. Méthode selon la revendication 1 **caractérisé en ce que** le système particulaire de taille micro- ou nanométrique est obtenu par un procédé comprenant au moins les étapes suivantes :
1) mélange d'au moins un tensioactif dans la phase organique et homogénéisation,
2) mélange de la phase aqueuse comprenant au moins le polymère anionique avec la phase organique obtenue à l'étape précédente, et mélange de la phase aqueuse comprenant au moins le polymère cationique avec la phase organique obtenue à l'étape précédente, puis homogénéisation des deux émulsions.
3) mélange des deux émulsions sous agitation mécanique

4. Méthode selon l'une des revendications 1 à 3 dans lequel le polymère anionique est choisi parmi les polymères ou copolymères dérivant de monomères anioniques contenant des groupements carboxylate, sulfonate, phosphate ou phosphonate, les copolymères synthétiques dérivant de monomères anioniques tels que décrits précédemment et de monomères neutres et les polymères naturels.

5. Méthode selon l'une des revendications 1 à 4 dans lequel le polymère cationique est choisi parmi les polymères ou copolymères synthétiques dérivant de monomères cationiques classiques, c'est-à-dire de formule générale suivante: 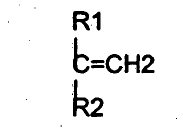 où R1 ou R2 comportent au moins un atome N, les polyethylènes imines, les polyamides amines, les polyamines, les copolymères synthétiques dérivant de monomères cationiques et de monomères neutres et les polymères naturels tels que les amidons modifiés positivement, les chitosanes, la gélatine, les galactomannanes modifiés positivement, ou les dérivés cellulosiques modifiés positivement.

6. Méthode selon l'une des revendications 1 à 5 dans lequel le tensioactif est un tensioactif non ionique choisi parmi les alcools gras oxyéthylés, les alkylphénols oxyéthylés, les produits oxyéthylés-oxypropylés, les éthers de glucose, les esters de glycérol, les esters de polyéthylèneglycols, les esters de sorbitanne, les esters de sucre, les diéthanolamides, les amines grasses éthoxylées, alkanolamides éthoxylées, les amines éthoxylées, ou les copolymères bloc d'oxyde d'éthylène ou de propylène.

7. Méthode selon l'une des revendications 1 à 6 **caractérisé en ce que** la phase organique est constituée soit par une huile minérale commerciale soit par une huile de synthèse, ou par une huile végétale ou tout mélange de ces huiles.

8. Méthode selon l'une des revendications 2 à 7 dans lequel la concentration en tensioactif est supérieure à la concentration micellaire critique avant le mélange des deux émulsions.

9. Méthode selon l'une des revendications 2 à 8 dans lequel la concentration en polymères anioniques ou cationiques dans les phases aqueuses est comprise entre 0,5 et 50% en masse.

10. Méthode selon l'une des revendications 2 à 9 dans lequel le rapport des phases eau/huile est compris entre 10 et 50 % en volume de phase aqueuse.

11. Méthode selon l'une des revendications 1 à 10 dans laquelle on injecte ladite composition dans une formation comportant une zone à forte perméabilité à l'eau pour réduire sélectivement la perméabilité à l'eau dans les réservoirs d'huile, de gaz ou dans les stockages de gaz.

12. Méthode selon l'une des revendications 1 à 11 dans laquelle ladite composition comprend un système particulaire dans lequel le polymère anionique est choisi parmi les polymères actifs anti-dépôts minéraux.

## Patentansprüche

1. Verfahren zum Behandeln von porösen und durchlässigen unterirdischen Formationen oder Hohlräumen, bei welchem die folgenden Schritte durchgeführt werden:
- Herstellen einer Zusammensetzung, die ein Partikelsystem im Mikro- oder Nanometermaßstab aus Polykation/Polyanion-Komplexen umfasst, welche durch Vermischen mindestens zweier Emulsionen des Typs Wasser-in-Öl erhalten wurde, wobei eine erste Emulsion ein anionisches Polymer in Wasser enthält und eine zweite Emulsion ein kationisches Polymer in Wasser enthält, wobei die Korngrößenverteilung der Komplexe ausgehend von den Korngrößenverteilungen der ersten und der zweiten Emulsion gezielt angepasst wird,
- Einpressen der Zusammensetzung in die poröse und durchlässige Formation, in welcher Wasser und/oder Öl und/oder Gas fließen.

2. Verfahren nach Anspruch 1, **dadurch gekennzeichnet, dass** Partikelsystem im Mikro- oder Nanometermaßstab durch ein Verfahren erhalten wird, das mindestens die folgenden Schritte umfasst:
1) Vermischen der wässrigen Phase, die mindestens das anionische Polymer enthält, mit mindestens einem Tensid, und Vermischen der wässrigen Phase, die mindestens das kationische Polymer enthält, mit mindestens einem Tensid, woraufhin die beiden auf diese Weise erhaltenen Emulsionen homogenisiert werden, um zwei rohe Vormischungen zu erhalten,
2) gegebenenfalls Einstellen der Vormischungen auf die angestrebte Korngrößenverteilung,
3) Hinzufügen der organischen Phase und Homogenisierung der beiden Emulsionen,
4) Vermischen der beiden Emulsionen unter mechanischem Rühren.

3. Verfahren nach Anspruch 1, **dadurch gekennzeichnet, dass** das Partikelsystem im Mikro- oder Nanometermaßstab durch ein Verfahren erhalten wird, das mindestens die folgenden Schritte umfasst:
1) Einmischen mindestens eines Tensids in die organische Phase und Homogenisieren,
2) Vermischen der wässrigen Phase, die mindestens das anionische Polymer enthält, mit der organischen Phase die im vorhergehenden Schritt erhalten wurde, und Vermischen der wässrigen Phase, die mindestens das kationische Polymer enthält, mit der organischen Phase, die im vorhergehenden Schritt erhalten wurde, woraufhin die beiden Emulsionen homogenisiert werden,
3) Vermischen der beiden Emulsionen unter mechanischem Rühren.

4. Verfahren nach einem der Ansprüche 1 bis 3, wobei das anionische Polymer aus den Polymeren oder Copolymer, die sich von anionischen Monomeren ableiten, welche Carboxylat-, Sulfonat-, Phosphat- oder Phosphatgruppen enthalten, aus den synthetischen Copolymeren, die sich von anionischen Monomeren wie den vorstehend beschriebenen und von neutralen Monomeren ableiten, und aus den natürlichen Polymeren ausgewählt ist.

5. Verfahren nach einem der Ansprüche 1 bis 4, wobei das kationische Polymer aus den synthetischen Polymer oder Copolymeren ausgewählt ist, die sich von herkömmlichen kationischen Monomeren ableiten, das heißt, von solchen mit der folgenden allgemeinen Formel: 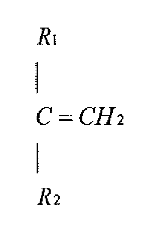 wobei R1 oder R2 mindestens ein N-Atom aufweisen,
sowie aus den Polyethyleniminen, aus den Polyamidaminen, aus den Polyaminen, aus den synthetischen Copolymeren, die sich von kationischen Monomeren und von neutralen Monomeren ableiten, und aus den natürlichen Polymeren wie etwa den positiv modifizierten Stärken, den Chitosanen, Gelatine, den positiv modifizierten Galactomannanen, oder den positiv modifizierten Cellulosederivaten.

6. Verfahren nach einem der Ansprüche 1 bis 5, wobei ist sich bei dem Tensid um ein nichtionisches Tensid handelt, das aus den ethoxylierten Fettalkoholen, den ethoxylierten Alkylphenolen, den ethoxyliertenpropoxylierten Stoffen, den Glucoseethern, den Glycerinestern, den Polyethylenglykolestern, den Sorbitanestern, den Zuckerestern, den Diethanolamiden, den ethoxylierten Fettaminen, den ethoxylierten Alkanolamiden, den ethoxylierten Aminen oder den Blockcopolymeren von Ethylen- oder Propylenoxid ausgewählt ist.

7. Verfahren nach einem der Ansprüche 1 bis 6, **dadurch gekennzeichnet, dass** die organische Phase entweder aus einem im Handel erhältlichen Mineralöl oder aus einem synthetischen Öl oder aus einem pflanzlichen Öl oder aus einer beliebigen Mischung dieser Öle besteht.

8. Verfahren nach einem der Ansprüche 2 bis 7, wobei die Konzentration an Tensid höher als die kritische Mizellbildungskonzentration vor dem Vermischen der beiden Emulsionen ist.

9. Verfahren nach einem der Ansprüche 2 bis 8, wobei die Konzentration an anionischen oder kationischen Polymeren in den wässrigen Phasen im Bereich von 0,5 bis 50 Massen-% liegt.

10. Verfahren nach einem der Ansprüche 2 bis 9, wobei das Verhältnis der Wasser/Öl-Phasen im Bereich von 10 bis 50 Volumen-% an wässriger Phase liegt.

11. Verfahren nach einem der Ansprüche 1 bis 10, wobei die Zusammensetzung in eine Formation eingepresst wird, die einen Bereich mit hoher Wasserdurchlässigkeit aufweist, um auf selektive Weise die Wasserdurchlässigkeit bei Öl- und Gaslagerstätten oder bei Gasspeichern zu verringern.

12. Verfahren nach einem der Ansprüche 1 bis 11, wobei die Zusammensetzung ein Partikelsystem umfasst, bei welchem das anionische Polymer aus den Polymeren ausgewählt ist, die gegen mineralische Ablagerungen wirksam sind.

## Claims

1. A method of treating porous and permeable underground formations or cavities, wherein the following stages are carried out:
- preparing a composition comprising a particulate system of micrometric or nanometric size of polycation/polyanion complexes obtained by mixing at least two water-in-oil type emulsions, a first emulsion containing an anionic polymer in water and a second emulsion containing a cationic polymer in water, the grain size of the complexes being controlled from the grain sizes of said first and second emulsions, and
- injecting said composition into the porous and permeable formation through which water and/or oil and/or gas flows.

2. A method as claimed in claim 1, **characterized in that** the particulate system of micrometric or nanometric size is obtained by means of a process comprising at least the following stages:
1) mixing the aqueous phase comprising at least the anionic polymer with at least one surfactant and mixing the aqueous phase comprising at least the cationic polymer with at least one surfactant, then homogenizing the two emulsions thus obtained so as to obtain two raw premixes,
2) optionally calibrating the premixes for the desired grain size,
3) adding the organic phase and homogenizing the two emulsions,
4) mixing the two emulsions under mechanical stirring.

3. A method as claimed in claim 1, **characterized in that** the particulate system of micrometric or nanometric size is obtained by means of a process comprising at least the following stages:
1) mixing at least one surfactant in the organic phase and homogenizing,
2) mixing the aqueous phase comprising at least the anionic polymer with the organic phase obtained in the previous stage and mixing the aqueous phase comprising at least the cationic polymer with the organic phase obtained in the previous stage, then homogenizing the two emulsions,
3) mixing the two emulsions under mechanical stirring.

4. A method as claimed in any one of claims 1 to 3, wherein the anionic polymer is selected from among polymers or copolymers derived from anionic monomers containing carboxylate, sulfonate, phosphate or phosphonate groups, synthetic copolymers derived from anionic monomers as described above and neutral monomers, and natural polymers.

5. A method as claimed in any one of claims 1 to 4, wherein the cationic polymer is selected from among synthetic polymers or copolymers derived from conventional cationic monomers, i.e. having the following general formula: 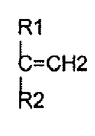 where R1 or R2 comprises at least one N atom, polyethylene imines, polyamide amines, polyamines, synthetic copolymers derived from cationic monomers and neutral monomers, and natural polymers such as positively modified starches, chitosanes, gelatin, positively modified galactomannanes or positively modified cellulose derivatives.

6. A method as claimed in any one of claims 1 to 5, wherein the surfactant is a non-ionic surfactant selected from among oxyethylated fatty alcohols, oxyethylated alkylphenols, oxyethylated-oxypropylated products, glucose ethers, glycerol esters, polyethylene glycol esters, sorbitan esters, sugar esters, diethanolamides, ethoxylated fatty amines, ethoxylated alkanolamides, ethoxylated amines, or ethylene or propylene oxide block copolymers.

7. A method as claimed in any one of claims 1 to 6, **characterized in that** the organic phase consists of either a commercial mineral oil or a synthetic oil, or a vegetable oil or any mixture thereof.

8. A method as claimed in any one of claims 2 to 7, wherein the surfactant concentration is higher than the critical micelle concentration prior to mixing the two emulsions.

9. A method as claimed in any one of claims 2 to 8, wherein the anionic or cationic polymer concentration in the aqueous phases ranges between 0.5 and 50 mass %.

10. A method as claimed in any one of claims 2 to 9, wherein the water/oil phase ratio ranges between 10 and 50 % by volume of aqueous phase.

11. A method as claimed in any one of claims 1 to 10, wherein said composition is injected into a formation comprising a highly water-permeable zone for selectively reducing the water permeability in oil, gas or gas storage reservoirs.

12. A method as claimed in any one of claims 1 to 11, wherein said composition comprises a particulate system where the anionic polymer is selected from among active anti-mineral-deposit polymers.
